# EUROPEAN PATENT APPLICATION

(11) **EP 2 287 713 A2**
(43) Date of publication of application: **23.02.2011**
(21) Application number: 10251111.0
(22) Date of filing: 17.06.2010
(51) Int. Cl.: G06F 3/042

(54) **Interactive input system and method**

(30) Priority: 17.06.2009 US 218028 P
(71) Applicant: SMART Technologies ULC, Calgary, Alberta T2L 1Y1 (CA)
(72) Inventor: Hos, Wiebe, Calgary, Alberta T2L 1Y1 (CA); Keenan, Vaughn E., Calgary, Alberta T3A 5B3 (CA)
(74) Representative: Naismith, Robert Stewart

(57) **Abstract**

An arm assembly configured to be mounted to a display unit supports imaging devices thereon and is longitudinally extendable to position the imaging devices at spaced locations relative to a display surface of the display unit such that the fields of view of the imaging devices look generally across the display surface.

## Description

### Field of the Invention

The present invention relates generally to interactive input systems, and particularly to an interactive input system and an arm assembly therefor.

### Background of the Invention

Interactive input systems that allow users to inject input (e.g. digital ink, mouse events, etc.) into an application program using an active pointer (e.g. a pointer that emits light, sound or other signal), a passive pointer (e.g. a finger, cylinder or other object) or other suitable input device such as for example, a mouse or trackball, are well known. These interactive input systems include but are not limited to: touch systems comprising touch panels employing analog resistive or machine vision technology to register pointer input such as those disclosed in U.S. Patent Nos. 5,448,263;6,141,000; 6,337,681; 6,747,636; 6,803,906; 7,232,986; 7,236,162; and 7,274,356 and 7,532,206 assigned to SMART Technologies ULC of Calgary, Alberta, Canada, assignee of the subject application, the contents of which are incorporated herein by reference in their entiretly; touch systems comprising touch panels employing electromagnetic, capacitive, acoustic or other technologies to register pointer input; tablet personal computers (PCs); laptop PCs; personal digital assistants (PDAs); and other similar devices.

Above-incorporated U.S. Patent No. 6,803,906 to Morrison et al. discloses a touch system that employs machine vision to detect pointer interaction with a touch surface on which a computer-generated image is presented. A rectangular bezel or frame surrounds the touch surface and supports digital imaging devices at its corners. The digital imaging devices have overlapping fields of view that encompass and look generally across the touch surface. The digital imaging devices acquire images looking across the touch surface from different vantages and generate image data. Image data acquired by the digital imaging devices is processed by on-board digital signal processors to determine if a pointer exists in the captured image data. When it is determined that a pointer exists in the captured image data, the digital signal processors convey pointer characteristic data to a master controller, which in turn processes the pointer characteristic data to determine the location of the pointer in (x,y) coordinates relative to the touch surface using triangulation. The pointer coordinates are conveyed to a computer executing one or more application programs. The computer uses the pointer coordinates to update the computer-generated image that is presented on the touch surface. Pointer contacts on the touch surface can therefore be recorded as writing or drawing or used to control execution of application programs executed by the computer.

Above-incorporated U.S. Patent No. 7,532,206 to Morrison et al. discloses a touch system and method that differentiates between passive pointers used to contact a touch surface so that pointer position data generated in response to a pointer contact with the touch surface can be processed in accordance with the type of pointer used to contact the touch surface. The touch system comprises a touch surface to be contacted by a passive pointer and at least one imaging device having a field of view looking generally along the touch surface. At least one processor communicates with the at least one imaging device and analyzes images acquired by the at least one imaging device to determine the type of pointer used to contact the touch surface and the location on the touch surface where pointer contact is made. The determined type of pointer and the location on the touch surface where the pointer contact is made are used by a computer to control execution of an application program executed by the computer.

In order to determine the type of pointer used to contact the touch surface, in one embodiment a curve of growth method is employed to differentiate between different pointers. During this method, a horizontal intensity profile (HIP) is formed by calculating a sum along each row of pixels in each acquired image thereby to produce a one-dimensional profile having a number of points equal to the row dimension of the acquired image. A curve of growth is then generated from the HIP by forming the cumulative sum from the HIP.

Although passive touch systems provide some advantages over active touch systems and work extremely well, using both active and passive pointers in conjunction with a touch system provides more intuitive input modalities with a reduced number of processors and/or processor load.

U.S. Patent Nos. 6,335,724 and 6,828,959 to Takekawa et al. disclose a coordinate-position input device having a frame with a reflecting member for recursively reflecting light provided in an inner side from four edges of the frame forming a rectangular form. Two optical units irradiate light to the reflecting members and receive the reflected light. With the mounting member, the frame can be detachably attached to a white board. The two optical units are located at both ends of any one of the frame edges forming the frame, and at the same time the two optical units and the frame body are integrated to each other.

U.S. Patent No. 6,828,959 to Takekawa also discloses a coordinate-position input device having a frame comprising a plurality of frame edges having a nested, telescoping arrangement. The frame edges together with retractable reflecting members are accommodated in frame-end sections. Since the frame edges are extendable, the size of the coordinate-position input device can be adjusted according to the size of a white board or a display unit used with the device. Mounting members are provided on each of the frame-end sections that are used to mount the device to the white board or the display unit. An optical unit can be removably attached to each frame-end section, and the irradiating direction of the optical unit is adjustable.

Although adjustable coordinate-position input devices are known, improvements are desired. It is an object of the present invention at least to provide a novel interactive input system and a novel ann assembly therefor.

### Summary of the Invention

Accordingly, in one aspect there is provided an arm assembly configured to be mounted to a display unit, said arm assembly supporting imaging devices thereon and being longitudinally extendable to position the imaging devices at spaced locations relative to a display surface of said display unit such that the fields of view of the imaging devices look generally across said display surface.

In one embodiment, the arm assembly comprises a body configured to be mounted to the display unit and at least one moveable ann received by the body, the arm being longitudinally slideable relative to the body. In one form, the arm assembly comprises two moveable arms received by the body, the arms being longitudinally slidable relative to the body in opposite directions, each of the arms supporting a respective one of the imaging devices. In another form, the arm assembly comprises one moveable arm received by the body and one fixed arm extending from the body in a direction opposite to the direction of sliding movement of the moveable ann.

In one embodiment, each of the imaging devices is accommodated within a housing adjacent a distal end of the respective arm. Each housing comprises an aperture through which the imaging device looks.

In one embodiment, the arm assembly further comprises a controller unit mounted thereon. The controller unit is mounted either within the interior of the at least one moveable arm, within the body or on the body.

In another aspect there is provided an interactive input system comprising a display unit having a display surface; a bezel disposed around at least a portion of the periphery of a region of interest proximate said display surface and having an inwardly facing surface; and an elongate arm assembly mounted to the display unit, said arm assembly supporting imaging devices thereon and being longitudinally extendable to position the imaging devices at spaced locations relative to the display surface such that the fields of view of the imaging devices encompass the region of interest.

In still another aspect, there is provided a kit for an interactive input system comprising a plurality of bezel segments configurable to form a reflective bezel for surrounding at least a portion of the periphery of a region of interest adjacent a display surface of a display unit; and an elongate arm assembly configured to be mounted to the display unit, said arm assembly supporting imaging devices thereon and being longitudinally extendable to position the imaging devices at spaced locations relative to the display surface such that the fields of view of the imaging devices encompass the region of interest.

### Brief Description of the Drawings

Embodiments will now be described more fully with reference to the accompanying drawings in which:

Figure 1 is a perspective view of an interactive input system;

Figures 2a and 2b are front and side elevational views, respectively, of the interactive input system of Figure 1;

Figure 3 is a block diagram of the interactive input system of Figure 1;

Figure 4 is a block diagram an imaging device forming part of the interactive input system of Figure 1;

Figure 5 is a block diagram of a master controller forming part of the interactive input system of Figure 1;

Figures 6a and 6b are perspective views of an arm assembly forming part of the interactive system of Figure 1, in retracted and extended states, respectively;

Figure 7 is a perspective exploded view of a portion of the arm assembly of Figures 6a and 6b;

Figure 8 is a perspective view of an alignment device forming part of the arm assembly of Figures 6a and 6b;

Figure 9 is a rear perspective sectional view of the arm assembly of Figures 6a and 6b;

Figure 10 is a rear sectional view of a portion of the arm assembly of Figures 6a and 6b;

Figure 11 is a cross sectional view of a bezel forming part of the interactive input system of Figure 1;

Figure 12a is a perspective view of an alignment pin forming part of the interactive input system of Figure 1;

Figure 12b is a perspective view of an alignment jig for use with the alignment pin of Figure 12a;

Figures 13a and 13b are perspective and cross-sectional views, respectively, of another embodiment of a bezel forming part of the interactive input system of Figure 1;

Figure 14 is a cross-sectional view of yet another embodiment of a bezel forming part of the interactive input system of Figure 1;

Figure 15 is a perspective view of another embodiment of an interactive input system;

Figure 16 is a front elevational view of yet another embodiment of an interactive input system;

Figures 17a and 17b are perspective views of a bezel forming part of the interactive input system of Figure 16; and

Figure 18 is a perspective view of another embodiment of an arm assembly forming part of the interactive input system of Figure 1.

### Detailed Description of the Embodiments

The following is directed to an interactive input system comprising an arm assembly having one or two moveable arms on which imaging devices are mounted. The ann assembly is generally lightweight, and is configured to be fastened to or otherwise secured to a display unit, such as for example a plasma display panel, a liquid crystal display (LCD) panel etc., that has a display surface above which generally defines a region of interest. The region of interest is surrounded by a reflective or retro-reflective bezel. The moveable arm or arms enable the imaging devices to be positioned relative to the edges of the display panel so that at least the entirety of the region of interest is within the fields of view of the imaging devices. This adjustability allows the arm assembly to be used with display panels of more than one size. The bezel may be segmented, and the segments may be cut to size so as to fit the periphery of the display panel. The subject interactive input system is a low cost, adjustable alternative to prior art interactive input systems.

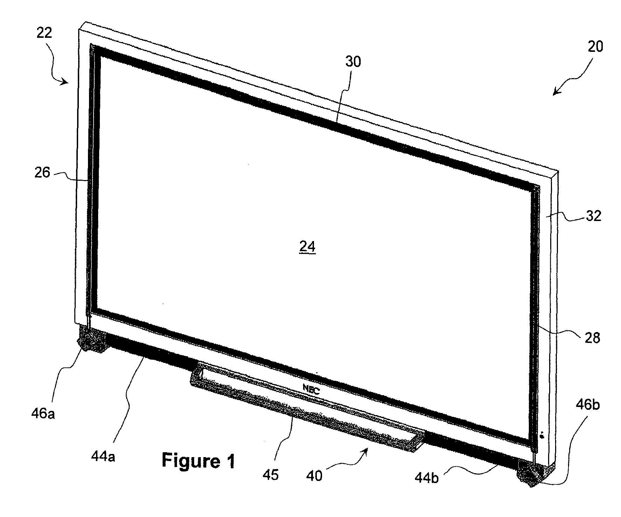

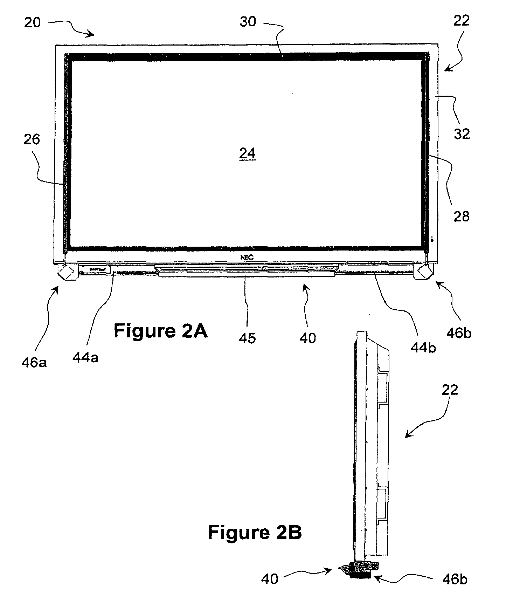

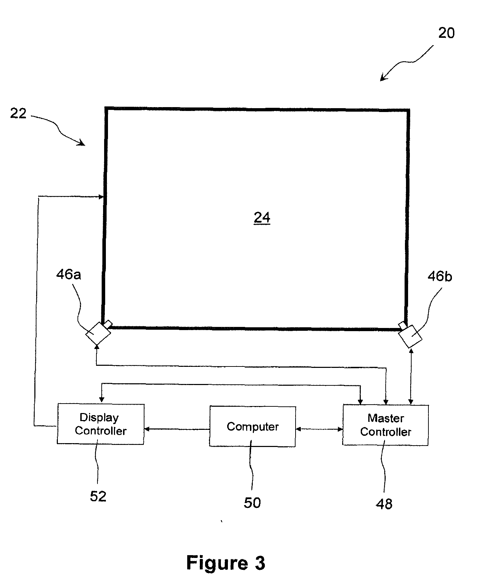

Turning now to Figures 1 to 5, an interactive input system that allows a user to inject input such as digital ink, mouse events etc. into an application program is shown, and is generally identified by reference numeral 20. Interactive input system 20 comprises a display unit 22 having a display surface 24. Display unit 22 is for example, a plasma television or display panel, a liquid crystal display (LCD) device, a flat panel display device, a cathode ray tube, a standard front projection whiteboard, etc. Interactive input system 20 also comprises a bezel that engages the display unit 22, and partially surrounds the display surface 24. In this embodiment, the bezel comprises three bezel segments 26, 28 and 30. Bezel segments 26 and 28 extend along opposite side edges of the display surface 24 while bezel segment 30 extends along the top edge of the display surface 24. Bezel segments 26 to 30 are affixed to a frame 32 of display unit 22, and are oriented so that their inwardly facing surfaces 34 are generally perpendicular to the plane of the display surface 24. The inwardly facing surfaces 34 of the bezel segments are coated or covered with a highly reflective material such as for example retro-reflective material.

An adjustable arm assembly 40 is mounted to the bottom of display unit 22. Arm assembly 40 comprises two longitudinally extendable arms 44a and 44b extending from opposite ends of a body 45. An imaging device 46a and 46b is mounted on each of arms 44a and 44b, respectively. Arm assembly 40 is adjustable so as to allow the imaging devices 46a and 46b to be positioned so that the field of view of each imaging device looks generally across the display surface 24 and views the inwardly facing surfaces of the bezel segments 26,28 and 30. In this manner, pointers brought into a region of interest in proximity with the display surface 24 are seen by the imaging devices 46a and 46b as will be described.

Arm assembly 40 also comprises a master controller 48 accommodated by the body 45 that communicates with the imaging devices 46a and 46b and with a general purpose computing device 50 and a display controller 52. Display controller 52 is in communication with the display unit 22 and communicates display output thereto. The general purpose computing device 50 executes one or more application programs and uses pointer location information communicated from the master controller 48 to generate and update the display output that is provided to the display controller 52 for output to the display unit 22, so that the image presented on the display surface 24 reflects pointer activity proximate the display surface 24. In this manner, pointer activity proximate the display surface 24 can be recorded as writing or drawing or used to control execution of one or more application programs running on the general purpose computing device 50. The display controller 52 also modifies the display output provided to the display unit 22 when a pointer ambiguity condition is detected to allow the pointer ambiguity condition to be resolved thereby to improve pointer verification, localization and tracking.

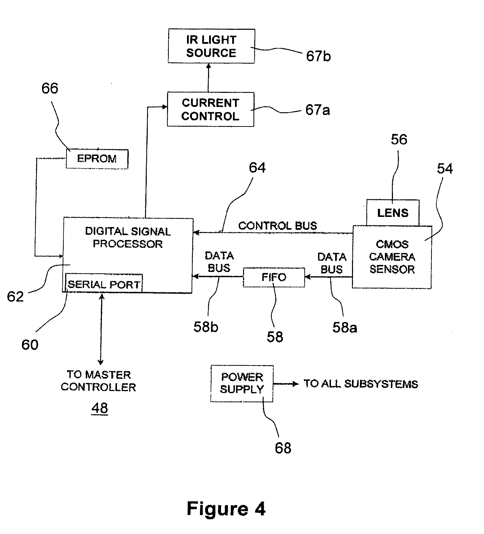

Referring to Figure 4, one of the imaging devices is better illustrated. As can be seen, each imaging device comprises an image sensor 54 such as that manufactured by Micron Technology, Inc. ofBoise, Idaho under model No. MT9V022 fitted with an 880 nm lens 56 of the type manufactured by Boowon Optical Co. Ltd. under model No. BW25B. The lens 56 provides the image sensor 54 with a field of view that is sufficiently wide at least to encompass the display surface 24. The image sensor 54 communicates with and outputs image frame data to a first-in first-out (FIFO) buffer 58 via a data bus 58a. A digital signal processor (DSP) 62 receives the image frame data from the FIFO buffer 58 via a second data bus 58b and provides pointer data to the master controller 48 via a serial input/output port 60 when one or more pointers exist in image frames captured by the image sensor 54. The image sensor 54 and DSP 62 also communicate over a bi-directional control bus 64. An electronically programmable read only memory (EPROM) 66, which stores image sensor calibration parameters, is connected to the DSP 62. DSP 62 is also connected to a current control module 67a, which is connected to an infrared (IR) light source 67b. IR light source 67b comprises one or more IR light emitting diodes (LEDs) and associated lens assemblies and provides IR backlighting over the display surface 24. Of course, those of skill in the art will appreciate that other types of suitable radiation sources to provide backlighting over the display surface 24 may be used. The imaging device components receive power from a power supply 68.

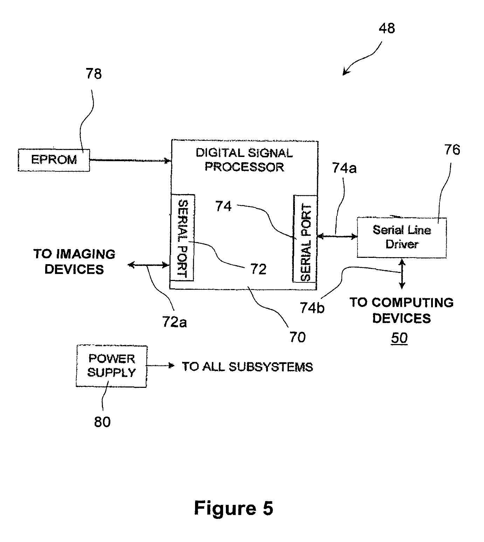

Figure 5 better illustrates the master controller 48. Master controller 48 comprises a DSP 70 having a first serial input/output port 72 and a second serial input/output port 74. The master controller 48 communicates with the imaging devices 46a and 46b via first serial input/output port 72 over communication lines 72a. Pointer data received by the DSP 70 from the imaging devices 46a and 46b is processed by the DSP 70 to generate pointer location data. DSP 70 communicates with the general purpose computing device 50 via the second serial input/output port 74 and a serial line driver 76 over communication lines 74a and 74b. Master controller 48 further comprises an EPROM 78 storing interactive input system parameters that are accessed by DSP 70. The master controller components receive power from a power supply 80.

The general purpose computing device 50 in this embodiment is a personal computer or the like comprising, for example, a processing unit, system memory (volatile and/or non-volatile memory), other non-removable or removable memory (e.g. a hard disk drive, RAM, ROM, EEPROM, CD-ROM, DVD, flash memory, etc.) and a system bus coupling the various computing device components to the processing unit. The general purpose computing device 50 may also comprise a network connection to access shared or remote drives, one or more networked computers, or other networked devices. The processing unit runs a host software application/operating system which, during execution, provides a graphical user interface that is presented on the display surface 24 such that freeform or handwritten ink objects and other objects can be input and manipulated via pointer interaction with the region of interest in proximity with display surface 24.

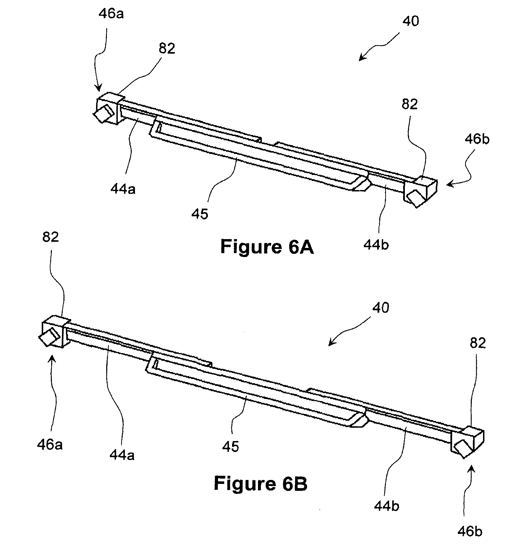

Turning now to Figures 6 to 10, the arm assembly 40 is further illustrated. As can be seen, the body 45 has a generally hollow configuration, and in this embodiment has a "C-shaped" cross section. Arms 44a and 44b are sized so that a portion of their lengths are accommodated within the body 45. In this embodiment, each of arms 44a and 44b is moveable longitudinally between a retracted state, in which a portion of each arm is accommodated within the body 45, and an extended state, in which each arm is longitudinally extended from the body 45, as shown in Figures 6a and 6b, respectively. The moveability of the arms 44a and 44b allows the imaging devices 46a and 46b to be positioned such that the entirety of the display surface 24 is within the fields of view of the imaging devices 46a, 46b.

The body 45 has strips of fastener material (not shown) disposed on its upper surface. The strips of fastener material cooperate with corresponding strips of fastener material (not shown) disposed on the underside of the display unit 22 thereby to secure the arm assembly 40 to the display unit 22. In this embodiments, the fastener material on the body 45 and the corresponding fastener material on the display unit 22 is of the 3 M Dual Lock™ type. Each arm 44a, 44b also has one or more strips of fastener material thereon (not shown). The strips of fastener material on the arms 44a and 44b cooperate with strips of fastener material (not shown) on the underside of display unit 22 once the arms have been extended and properly positioned relative to display surface 24, as will be further described below. In this embodiment, the fastener material on the arms 44a and 44b and the corresponding fastener material on the underside of display unit 22 is also of the 3M Dual Lock ™ type.

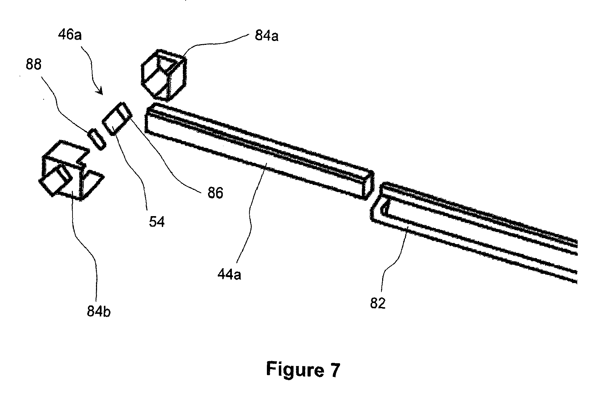

Figure 7 better illustrates the arm 44a. As can be seen, a housing 82 is attached to the distal end of the arm 44a and accommodates the imaging device 46a. The housing 82 comprises a front cover 84a and a rear cover 84b which matingly engage to form the housing. An aperture is provided in the housing 82 and is covered by a protective lens cover 88 through which the imaging device 46a looks. The imaging device components are mounted on an imaging device board 86 that is fixedly mounted within the housing 82 such that the imaging device 46a has a fixed viewing angle relative to the arm 44a. Although not shown, arm 44b is of an identical construction.

In this embodiment, image sensor 54 has a field of view that is slightly greater than 90 degrees, and is oriented such that the boundaries of its field of view in the vertical plane (e.g. the plane parallel to display surface 24) are generally aligned with the horizontal and vertical edges of display surface 24. Accordingly, to properly position the imaging devices 46a and 46b on the moveable arms 44a and 44b relative to display surface 24 so as to enable the entirety of the display surface 24 and the surrounding bezel to be within the field of view the imaging devices, the lens 56 of each image sensor 54 should be vertically aligned with the reflective surfaces on the bezel segments. The imaging devices 46a and 46b should also be aligned with respect to the normal direction of the display surface 24 such that both the bezel and the display surface 24 are within the field of view of the image sensors 54. This may be achieved, for example, by repositioning arm assembly 40 relative to the display unit 22, as necessary.

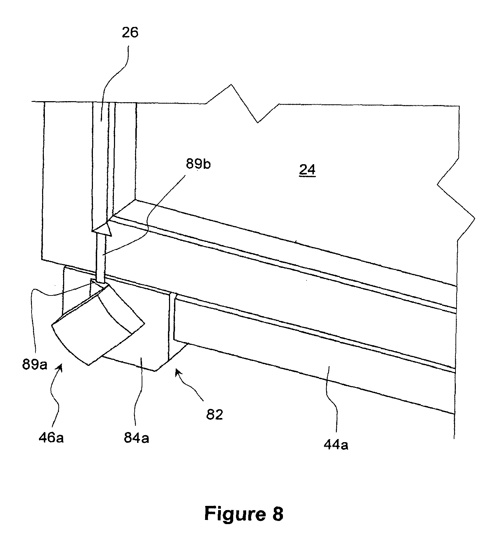

Figure 8 shows an alignment apparatus for assisting positioning of the imaging devices 46a and 46b relative to display surface 24. The front cover 84a of each housing 82 comprises an alignment aperture 89a for receiving an alignment strip 89b. When inserted into aperture 89a, the alignment strip 89b may be aligned with one of the bezel segments 26 or 28 allowing the imaging device within that housing to be properly positioned relative to display surface 24. Alignment strip 89b may be permanently affixed to the front cover 84a of each housing 82 or may be only temporarily affixed to the front cover 84a of each housing and removed once each arm has been properly positioned.

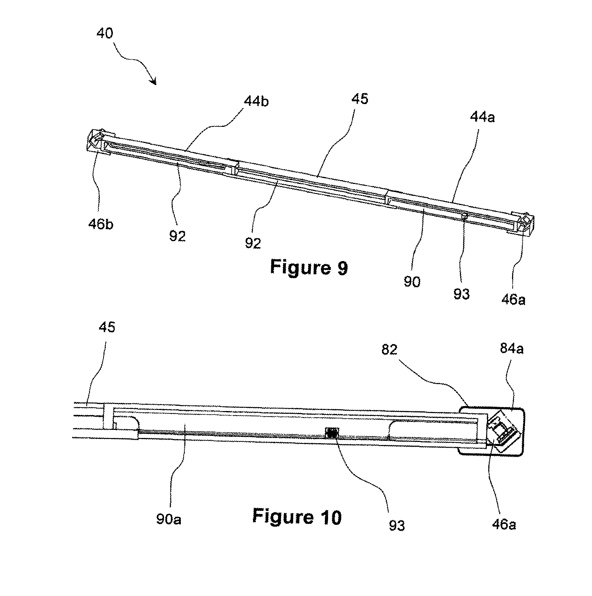

Figure 9 is a rear cutaway view of the arm assembly 40 showing the interiors of the body 45 and the arms 44a and 44b. In this embodiment, almas 44a and 44b also have a generally hollow configuration. Arm 44a accommodates a controller unit 90 having a generally flat profile, and which is mounted in the interior of the arm 44a. Controller unit 90 comprises the master controller 48 and optionally the general purpose computing device 50 and/or the display controller 52. In this embodiment, master controller 48, general purpose computing device 50 and display controller 52 are all comprised within controller unit 90. Controller unit 90 is positioned such that it does not interfere with the movement of the arm 44a relative to the body 45. Controller unit 90 is in communication with imaging devices 46a and 46b through cables 92. Cables 92 are arranged within the interiors of the arms 44a and 44b and the body 45 such that they do not interfere with the movement of the arms 44a and 44b relative to body 45. Controller unit 90 also has a communication port 93 through which the display controller 52 can communicate with the display unit 22. Controller unit 90 also comprises a power input (not shown). A removable panel 90a covers the rear of the arm 44a housing the controller unit 90, as shown in Figure 10.

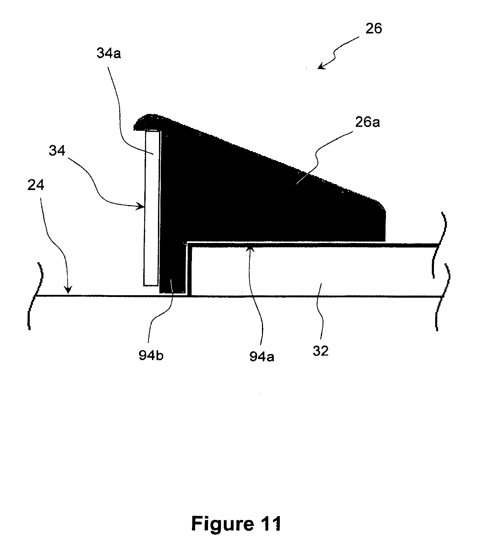

Figure 11 shows the bezel segment 26 in cross-section. The bezel segments 28 and 30 have an identical cross-section. As mentioned previously, the inwardly facing surface 34 of the bezel segment 26 is generally perpendicular to the plane of the display surface 24. In this embodiment, the bezel 26 comprises a body 26a and retro-reflective material 34a such as retro-reflective tape affixed to the inwardly facing side of the body 26a. The bezel segment 26 also has a support surface 94a and a flange 94b that abut against the frame 32 surrounding the display surface 24. In this embodiment, the bezel segment 26 is affixed to the frame 32 by means of double-sided adhesive tape (not shown) positioned between the support surface 94a and the frame 32. Flange 94b permits the retro-reflective surface 34 to be positioned such that it essentially contacts the display surface 24, as shown. It will be appreciated that by providing a retro-reflective surface 34 that is virtually in contact with the display surface 24 allows reflections that are essentially co-planar with display surface 24 to be imaged by imaging devices 46a and 46b, enabling pointer contact on display surface 24 to be more accurately detected.

In operation, the DSP 62 of each imaging device 46a and 46b generates clock signals so that the image sensor 54 of each imaging device captures image frames at the desired frame rate. The clock signals provided to the image sensors 52 are synchronized such that the image sensors of the imaging devices 46a and 46b capture image frames substantially simultaneously. The DSP 62 of each imaging device also signals the current control module 67a. In response, each current control module 67a connects its associated IR light source 67b to the power supply 68 thereby illuminating the IR light source resulting in IR backlighting being provided over the display surface 24. When no pointer is in proximity with the display surface 24, image frames captured by the image sensors 52 comprise a substantially uninterrupted bright band as a result of the infrared backlighting reflected by the retro-reflective surfaces 34 of the bezel segments 26,28 and 30. However, when one or more pointers are brought into proximity of display surface 24, each pointer occludes the IR backlighting reflected by the bezel segments and appears in captured image frames as a dark region interrupting the white bands.

Each image frame output by the image sensor 54 of each imaging device 46a and 46b is conveyed to its associated DSP 62. When a DSP 62 receives an image frame, the DSP 62 processes the image frame to detect the existence of one or more pointers. If one or more pointers exist in the image frame, the DSP 62 creates an observation for each pointer in the image frame. Each observation is defined by the area formed between two straight lines, one line of which extends from the focal point of the imaging device and crosses the right edge of the dark region representing the pointer and the other line of which extends from the focal point of the imaging device and crosses the left edge of the dark region representing the pointer. The DSP 62 then conveys the observation(s) to the master controller 48 via the serial line driver 76 and the communication lines 74a and 74b.

The master controller 48 in response to received observations from the imaging devices 46a and 46b, examines the observations to determine those observations from imaging devices 46a and 46b that overlap. When both imaging devices 46a and 46b see the same pointer resulting in observations that overlap, the center of the resultant bounding box, that is delineated by the intersecting lines of the overlapping observations, and hence the position of the pointer in (x,y) coordinates relative to the display surface 24 is calculated using well known triangulation, as described in above-incorporated U.S. Patent No- 6,803,906 to Morrison et al.

The master controller 48 then examines the triangulation results to determine if one or more pointer ambiguity conditions exist. If no pointer ambiguity condition exists, the master controller 48 outputs each calculated pointer position to the general purpose computing device 50. The general purpose computing device 50 in turn processes each received pointer position and updates the display output provided to the display controller 52, if required. The display output generated by the general purpose computing device 50 in this case passes through the display controller 52 unmodified and is received by the display unit 22. The display unit 22 in turn presents an image reflecting pointer activity. In this manner, pointer interaction with display surface 24 can be recorded as writing or drawing or used to control execution of one or more application programs running on the general purpose computing device 50.

If one or more pointer ambiguity conditions exist, the master controller 48 conditions the display controller 52 to dynamically manipulate the display output of the general purpose computing device 50 in a manner to allow each pointer ambiguity condition to be resolved as described in International PCT Application No. PCT/CA2010/000190, assigned to SMART Technologies ULC of Calgary, Alberta, Canada, assignee of the subject application, the content of which is incorporated herein by reference in its entirety. Once resolved, the master controller 48 outputs each calculated pointer position to the general purpose computing device 50. The general purpose computing device 50 in turn processes each received pointer position and updates the display output provided to the display controller 52, if required. The display output generated by the general purpose computing device 50 again passes through the display controller 52 unmodified and is received by the display unit 22 and displayed on the display surface 24.

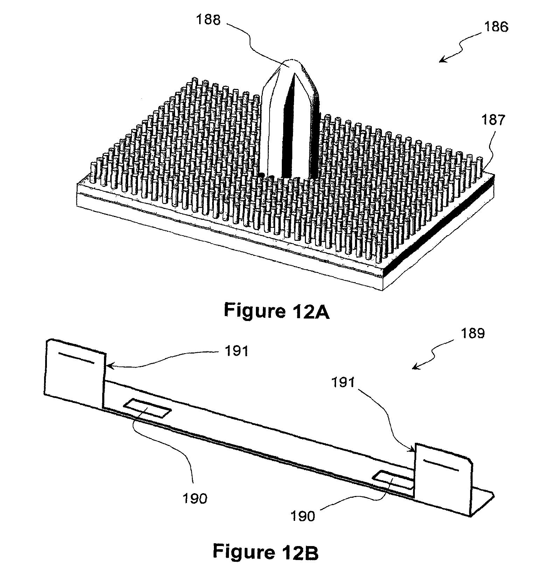

Figure 12a shows an alternative embodiment of fasteners for mounting each of the arms 44a and 44b to the underside of display unit 22, and which is generally indicated by reference numeral 186. The fasteners 186 are positioned at longitudinally spaced locations and are secured to the underside of the display unit 22. Each fastener 186 comprises a strip of fastening material 187 and an alignment pin 188 protruding from the surface of fastening material 187. Each fastener 186 is configured to be affixed to the underside of the display unit 22. In this embodiment, the fastening material is of the 3M Dual Lock ™ type. Pin 188 is sized to be received in a corresponding aperture (not shown) formed in the upper surface of its respective arm. Fastening material 187 engages a corresponding strip of fastening material (not shown) disposed on the upper surface of the respective arm surrounding the aperture. Fasteners 186 may be applied in the correct positions to the underside of display unit 22 using an alignment jig 189, as shown in Figure 12b. Alignment jig 189 comprises two apertures 190 for guiding the placement of the fasteners 186 onto the display unit 22. Alignment jig 189 also comprises two guide edges 191 that are spaced so as to be alignable with the edges of the display surface 24. Once guide edges 191 are aligned with the edges of the display surface 24, the fasteners 186 are applied to the underside of display unit 22 through the apertures 190. Arms 44a and 44b are then extended from the body 45 such that each pin 188 can be inserted into the corresponding aperture formed in the upper surface of the respective arm, ensuring the proper positioning of imaging devices 46a and 46b relative to the display surface 24. Each pin 188 also provides mechanical stability to the arms when received by the aperture. Those of skill in the art will understand that the fasteners are not limited to the configuration described in this embodiment. For example, the apertures may alternatively be bores passing through the entire thickness of the arms, and each pin may be sized to pass through the respective bore. The end of each pin may be configured to receive a wingnut, a nut, a clip, or other suitable fastener known in the art.

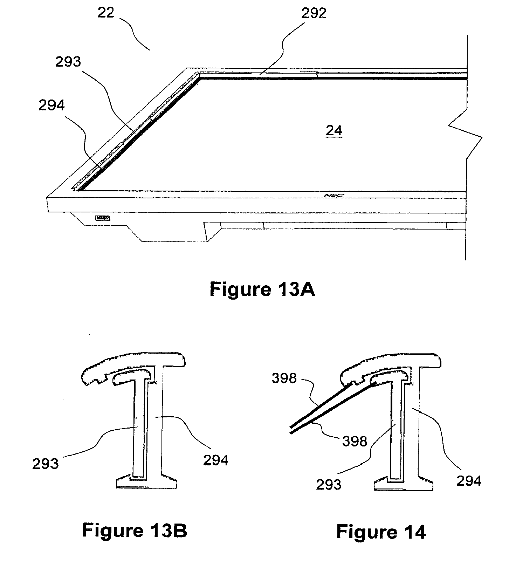

Figures 13a and 13b shows an alternative embodiment of a bezel for use with the interactive input system 20. In this embodiment, the bezel comprises a plurality of nested bezel segments 292 to 294. The nested bezel segments are slideably moveable relative to each other to provide an adjustable bezel that has dimensions corresponding to the periphery of the display surface 24. In this embodiment, the plurality of nested bezel segments comprises corner segments 292, center segments 293, and end segments 294, which are nested within each other and are extendable and retractable relative to each other, as shown. As will be appreciated, the adjustability of the bezel formed from nested bezel segments 292 to 294 allows the bezel to be fitted to display units 22 of more than one size.

Figure 14 shows an alternative adjustable bezel similar to that shown in Figures 13a and 13b. In this embodiment, each bezel segment in the plurality of nested bezel segments 292 to 294 comprises a flap 398 extending from an upper edge of an outwardly facing surface, as shown. Flap 398 creates a "blending effect" and improves the aesthetic appearance of the bezel.

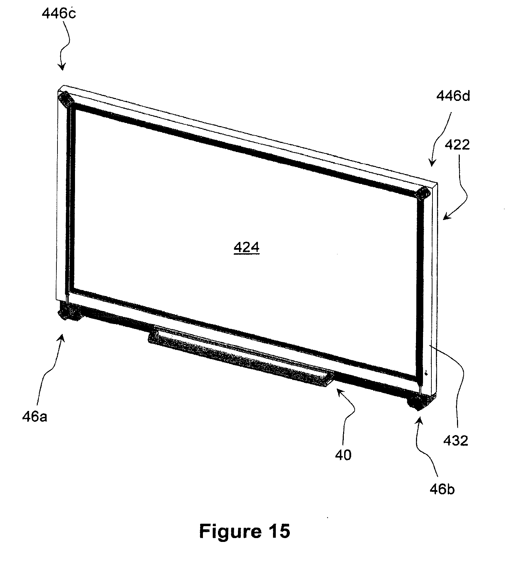

Although the embodiments described above are directed to an interactive input system comprising two imaging devices, the interactive input system may comprise additional imaging devices. Figure 15 shows an interactive input system comprising four imaging devices, generally indicated by reference numeral 420. Interactive input system 420 is generally similar to interactive input system 20 described above and with reference to Figures 1 to 11 but, in addition to imaging devices 46a and 46b mounted on the arm assembly 40, interactive input system 420 further comprises two imaging devices 446c and 446d mounted on the frame 432 near the upper corners of display surface 424. As will be appreciated, the four imaging devices 46a, 46b, 446c and 446d increase the imaging capability of the interactive input system 420 and provide improved detection for one or more pointers brought into proximity of the display surfaces 424. Here the bezel may comprise four bezel segments surrounding the display surface 424, including a bezel segment (not shown) extending along the lower edge of display surface 424.

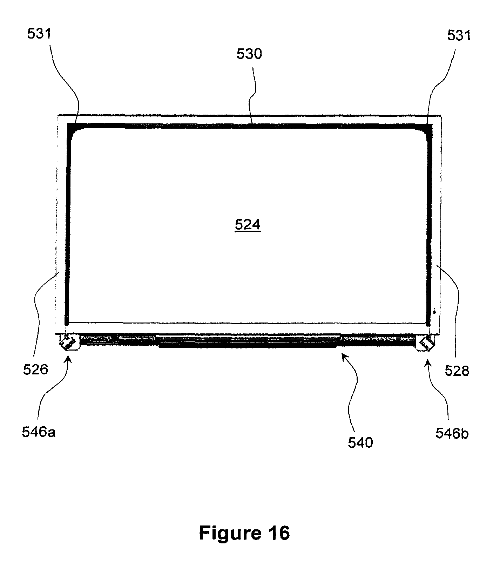

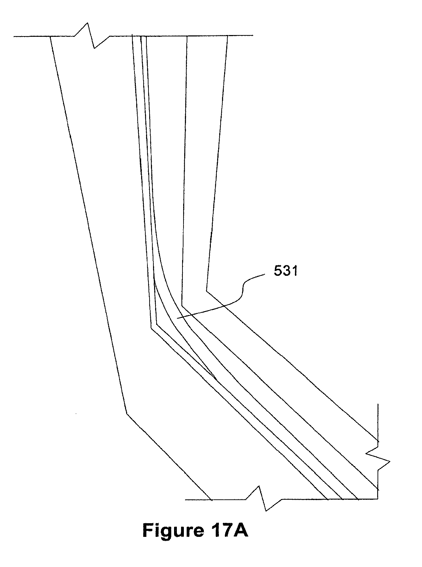

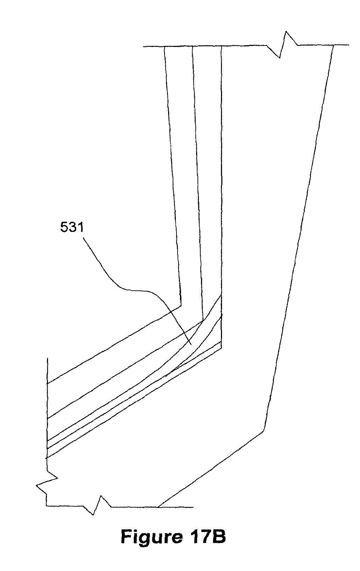

Although the bezels described above are formed of bezel segments that are generally linear, the bezel segments may alternatively be curved for improving the imaging of the retro-reflective surface of the bezel. An interactive input system comprising curved bezel segments is shown in Figures 16, 17a and 17b, and is generally indicated by reference numeral 520. Interactive input system 520 is otherwise similar to interactive input system 20 described above and with reference to Figures 1 to 11, with the exception of the bezel. In this embodiment, bezel comprises bezel segments 526 and 528 extending along opposite side edges of display surface 524, and bezel segment 530 extending along the top edge of display surface 524. Corner bezel segments 531 connect the bezel segment 530 to the bezel segments 526 and 528. The corner bezel segments 531 comprise a curved inwardly facing reflective surface. As will be appreciated, the curvature of corner segments 531 improves the visibility of the earner regions of the bezel as seen by the imaging devices 546a and 546b.

Although the arm assembly described above comprises two longitudinally extendable arms, the arm assembly may alternatively comprise only one arm that is moveable. For example, Figure 18 shows such an arm assembly for use with the interactive input system 20, and which is generally indicated by reference numeral 640. Arm assembly 640 is otherwise similar to arm assembly 40 described above and with reference to Figures 6 and 7, but comprises a body 682 having only one arm 644 that is slideable longitudinally relative to body 682. Ann 645 is non-moveable arm 645 and is fixed relative to the body 682. Arm assembly 640 comprises two imaging devices 646a and 646b. One imaging device 646a is mounted on the arm 644 near its free end, while the other imaging device 646b is mounted on non-moveable arm 645, as shown. It will be appreciated that through both proper positioning of the body 682 on the display unit (not shown) and through proper extension of the moveable arm 644 relative to body 682, arm assembly 640 provides sufficient adjustability to allow the imaging devices 646a and 646b to be properly positioned relative to display surface 624.

In the embodiments described above the imaging devices are in communication with the master controller through cables. The cables may be embodied in a serial bus, a parallel bus, a universal serial bus (USB), an Ethernet connection or other suitable wired connection. Alternatively, the imaging devices may communicate with the master controller by means of a wireless connection using a suitable wireless protocol such as for example Bluetooth, WiFi, ZigBee, ANT, IEEE 802.15.4, Z-Wave etc. Similarly, the master controller may communicate with the display controller and/or the general purpose computing device over one of a variety of wired connections such as for example, a universal serial bus, a parallel bus, an RS-232 connection, an Ethernet connection etc., or over a wireless connection.

Although in embodiments described above the controller unit is positioned within the interior of one of the arms of the arm assembly, the controller unit is not limited to this position and in other embodiments may alternatively be positioned anywhere in the interactive input system, including being mounted on the outside of the body of the ann assembly, or mounted within the interior of the body of the arm assembly. In any of these arrangements, the controller unit is positioned so as not to impede the movement of the arms relative to the body.

Although embodiments described above comprise a display surface having a periphery on which a reflective or retro-reflective bezel is disposed, such a bezel need not be employed. Alternatively, a series of light emitting diodes (LEDs) or other light sources may be disposed along the periphery of the display surface and optionally positioned behind a diffuser to illuminate the region of interest over the display surface and provide IR lighting to the imaging devices. In this case, the imaging devices do not require the IR light sources. Alternatively, the LEDs could be configured to emit light that reflects off of a diffuse reflector, as disclosed in U.S. Patent No. 7,538,759 to Newton and assigned to Next Holdings. Alternatively, the display surface could comprise a bezel that is illuminated using optical fibers or other forms of waveguide, as disclosed in U.S. Patent No. 7,333,095 to Lieberman et a1. assigned to Lumio. Such a powered bezel could be powered through a power connection to the arm assembly, a battery, a solar power source, or any other suitable power source.

Although embodiments described above comprise imaging devices that are fixedly mounted within the housings such that they have a fixed viewing angle relative to the arms, the imaging devices need not be fixedly mounted and alternatively may be pivotably mounted within the housings.

Although in the embodiments described above the fastener material is of the 3M™ Dual Lock™ type, those of skill in the art will appreciate that alternative fastener material known in the art, such as, but not limited to, Velcro™ may be used. Of course, rather than using fastener material, those of skill in the art will appreciate that other fasteners known in the art, such as, but not limited to, screws, straps, and the like may be used.

Although embodiments have been described, those of skill in the art will appreciate that variations and modifications may be made with departing from the spirit and scope thereof as defined by the appended claims.

## Claims

1. An arm assembly configured to be mounted to a display unit, said arm assembly supporting imaging devices thereon and being longitudinally extendable to position the imaging devices at spaced locations relative to a display surface of said display unit such that the fields of view of the imaging devices look generally across said display surface.

2. An arm assembly according to claim 1 comprising a body configured to be mounted to the display unit and at least one moveable ann received by the body, the arm being longitudinally slideable relative to the body.

3. An arm assembly according to claim 2 comprising two moveable arms received by the body, the arms being longitudinally slidable relative to the body in opposite directions, each of the arms supporting a respective one of the imaging devi ces.

4. An arm assembly according to claim 2 comprising one moveable arm received by the body and one fixed arm extending from the body in a direction opposite to the direction of sliding movement of the moveable ann.

5. An arm assembly according to claim 3 or 4 wherein each of said imaging devices is accommodated within a housing adjacent a distal end of the respective arm.

6. An arm assembly according to claim 5 wherein each housing comprises an aperture through which the imaging device looks.

7. An arm assembly according to any one of claims 1 to 6 further comprising a controller unit mounted thereon.

8. An arm assembly according to claim 7 wherein the controller unit is mounted either within the interior of the at least one moveable arm, within the body or on the body.

9. An arm assembly according to any one of claims 1 to 8 further comprising alignment means to facilitate proper positioning of said imaging devices.

10. An interactive input system comprising:
a display unit having a display surface;
a bezel disposed around at least a portion of the periphery of a region of interest proximate said display surface and having an inwardly facing surface; and
an elongate arm assembly according to any one of claims 1 to 9 mounted to the display unit.

11. A system according to claim 10 wherein the bezel comprises a plurality of nested bezel segments that are slideably adjustable relative to each other.

12. A system according to claim 10 or 11 wherein the inwardly facing surface of the bezel is retro-reflective.

13. A kit for an interactive input system comprising:
a plurality of bezel segments configurable to form a reflective bezel for surrounding at least a portion of the periphery of a region of interest adjacent a display surface of a display unit; and
an elongate arm assembly according to any one of claims 1 to 9 configured to be mounted to the display unit.
